# DEMANDE DE BREVET EUROPEEN

(11) **EP 2 083 554 A1**
(43) Date de publication de la demande: **29.07.2009**
(21) Numéro de dépôt: 09151082.6
(22) Date de dépôt: 22.01.2009
(51) Int. Cl.: H04L 29/08, H04N 7/173

(54) **Procédé de transmission en direct de contenus en vue d'une récupération en différé en mode P2P après découpage, et dispositif de controle et équipements associés**

(30) Priorité: 28.01.2008 FR 0850495
(71) Demandeur: Thomson Licensing, 92100 Boulogne-Billancourt (FR)
(72) Inventeur: Straub, Gilles, 35690, Acigné (FR); Boudani, Ali, 35700, RENNES (FR)
(74) Mandataire: Deschamps, Samuel

(57) **Abrégé**

Un procédé est dédié à la transmission de contenus à des équipements de communication (T1, T2) qui sont connectés à un réseau (R1) de diffusion de contenus et à un réseau de communication (R2). Ce procédé consiste i) à transmettre en direct des contenus à des équipements de communication (T1, T2) via le réseau de diffusion (R1), puis ii) à déterminer les équipements de communication (T1, T2) ayant reçu complètement et stocké les contenus transmis, puis iii) à sélectionner l'un (T1) de ces équipements de communication déterminés afin de lui demander de découper chaque contenu stocké en groupes de données en fonction d'une règle prédéfinie, puis de désigner dans chaque contenu stocké des premier et dernier groupes de données, puis iv) à demander aux autres équipements de communication (T2) ayant stocké complètement ces contenus de procéder à leur découpage en fonction de la règle prédéfinie et compte tenu des désignations de leurs premier et dernier groupes de données respectifs, et v) à stocker les identifiants des contenus découpés en correspondance des identifiants des équipements de communication (T1, T2) qui ont découpé ces contenus, de sorte que ces contenus puissent être récupérés auprès des équipements de communication (T1, T2) en mode P2P par d'autres équipements de communication (T'1-T'3).

## Description

### Domaine technique de l'invention

L'invention concerne la diffusion en continu et en direct de contenus, éventuellement multimédia, vers des équipements de communication connectés à des réseaux (ou infrastructures) de diffusion, en vue d'une mise à disposition de ces contenus diffusés pour d'autres équipements de communication pour une utilisation en différé.

L'invention concerne tous les réseaux (ou infrastructures) de diffusion, filaires ou non filaires, capables de diffuser en continu et en direct (ou en léger différé) des contenus (éventuellement multiplexés) à destination d'équipements de communication. Il pourra donc s'agir d'un réseau filaire, tel qu'un réseau à lignes de transmission de données à moyen ou haut débit, comme par exemple des lignes de type xDSL (pour « x Digital Subscriber Line ») ou des câbles ou encore des fibres optiques, ou d'un réseau de diffusion terrestre (par exemple de type DVB-T, DVB-H, T-DBM ou DAB) ou satellitaire ou encore hybride (c'est-à-dire à la fois terrestre (par exemple DVB-H) et satellitaire).

Par ailleurs, on entend ici par « équipement de communication » tout type d'équipement de communication faisant partie d'un, ou pouvant se connecter au moins à un, réseau de diffusion ainsi qu'à un réseau de communication filaire ou non filaire. Il pourra donc s'agir, par exemple, de téléphones fixes ou mobiles (ou cellulaires), d'ordinateurs fixes ou portables, d'assistants numériques personnels (ou PDAs, y compris les « pocket PCs »), de récepteurs de contenus (comme par exemple des décodeurs, des passerelles résidentielles (ou « residential gateways ») ou des STBs (« Set-Top Boxes »)), dès lors qu'ils sont équipés de moyens de communication propres à échanger des paquets de données de contenus, par exemple de type IP (« Internet Protocol »).

En outre, on entend ici par « contenu » un ensemble de données qui définit un programme de télévision ou de vidéo ou audio (radiophonique ou musical) ou de jeux ou multimédia, ou encore un fichier informatique (ou « data »).

### Etat de l'art

Comme le sait l'homme de l'art, il a été proposé de transmettre des contenus en continu et en direct, via un réseau de diffusion, éventuellement multiplexés sur un même canal (comme par exemple dans le cas d'un réseau DVB-T), à des clients disposant d'un équipement de communication. Cette transmission en mode diffusion (« broadcast » ou « multicast » (point à multipoints)) peut se faire dans le cadre soit d'un service de vidéo à la demande (ou VOD (« Video On Demand »)), lequel consiste à fournir à un client un ou plusieurs contenus qu'il a requis (ou qui sont susceptibles de l'intéresser), soit d'un service de diffusion de programmes (par exemple de télévision ou musicaux) en direct.

Par exemple, tous les contenus peuvent être transmis à tous les clients d'un groupe afin qu'ils les stockent et chaque client ne peut utiliser l'un des contenus stockés que s'il a payé des droits d'utilisation correspondant. On notera que les contenus diffusés sont également stockés par le fournisseur de contenus (ou l'opérateur) dans un serveur centralisé ou dans des serveurs distribués accessibles via un réseau de communication en vue d'une récupération ultérieure.

Cette méthode est avantageuse en terme d'utilisation des ressources du réseau de diffusion. Cependant, lorsque l'équipement (de communication) d'un client n'a pas reçu une partie au moins d'un contenu diffusé, il doit récupérer cette partie manquante auprès d'un serveur centralisé ou de serveurs distribués, via un réseau de communication, ce qui monopolise des ressources de ce dernier et nécessite plusieurs opérations au niveau de son coeur de réseau (ou « core network »). On comprendra que ce type de récupération de (portions de) contenus constitue un réel problème pour les opérateurs de réseau du fait du nombre sans cesse croissant de clients. En outre, cette méthode nécessite d'utiliser un ou plusieurs serveurs de (très) grandes capacités de stockage, dont les coûts sont d'autant plus élevés que les capacités de stockage sont grandes.

Afin d'améliorer la situation, il a été proposé de répartir les contenus entre les différents clients d'un groupe et d'échanger en différé des contenus choisis entre clients en mode pair à pair (ou P2P (pour « peer to peer »)). Cette méthode est notamment décrite dans le document « P2Proxy: peer-to-peer proxy caching scheme for VOD service », Lee et al, Proceedings, Sixth International Conference on Computational Intelligence and Multimedia Applications, pp. 272-277, Los Alamitos, CA, USA, 2005, IEEE Comput.Soc.

L'inconvénient de cette méthode réside dans le fait qu'elle ne concerne que la récupération de contenus en différé entre clients d'un même groupe et donc qui se « connaissent ». Lorsqu'un client qui ne fait pas partie d'un groupe veut récupérer des contenus en différé, l'opération s'avère complexe et peut nécessiter d'établir des liaisons avec plusieurs équipements de communication de clients d'un ou plusieurs groupes.

En outre, il n'existe pas de méthode connue permettant à un équipement de communication d'un client de différencier les données qui constituent la fin d'un contenu de celles qui constituent le contenu suivant, étant donné que les horaires de diffusion des contenus ne sont pas très précis. Par conséquent, on ne sait pas stocker dans un équipement de communication l'intégralité d'un contenu particulier issu d'un flux continu de contenus, en vue d'une récupération ultérieure, en mode P2P, par d'autres équipements de communication.

### Résumé de l'invention

L'invention a donc pour but d'améliorer la situation.

A cet effet, l'invention propose tout d'abord un procédé, dédié à la transmission de contenus à des équipements de communication qui sont connectés à un réseau de diffusion de contenus et à un réseau de communication, et consistant :
i) à transmettre en direct des contenus à des équipements de communication via le réseau de diffusion, puis
ii) à déterminer les équipements de communication qui ont reçu et stocké complètement les contenus transmis, puis
iii) à sélectionner l'un des équipements de communication déterminés afin de lui demander de découper chaque contenu stocké en groupes de données en fonction d'une règle prédéfinie, puis de désigner dans chaque contenu stocké des premier et dernier groupes de données, puis
iv) à demander aux autres équipements de communication ayant stocké complètement les contenus transmis de procéder au découpage de ces contenus stockés en fonction de la règle prédéfinie et compte tenu des désignations de leurs premier et dernier groupes de données respectifs, et
v) à stocker les identifiants des contenus découpés en correspondance des identifiants des équipements de communication qui ont découpés ces contenus, de sorte que ces contenus puissent être récupérés auprès de ces équipements de communication par d'autres équipements de communication, selon un mode de transmission de type pair à pair (P2P).

Le procédé selon l'invention peut comporter d'autres caractéristiques qui peuvent être prises séparément ou en combinaison, et notamment :
- au iii) on peut par exemple sélectionner un équipement de communication en fonction d'au moins un critère choisi ou bien par tirage au sort ;
- au iii) l'équipement de communication sélectionné peut découper chaque contenu stocké en groupes de données en fonction d'une règle prédéfinie portant sur la détection d'au moins une information choisie dans des entêtes accompagnant les données de contenu ;
   ➢ au iii) on peut détecter la présence d'un champ d'information choisi et on peut se servir de chaque champ d'information détecté pour délimiter deux groupes de données successifs ;
      - au iii), en présence de contenus transmis selon le format MPEG-2 TS, le champ d'information peut par exemple être choisi parmi (au moins) les champs PCR, PTS et EIT-PF ;
- au iv) chaque équipement de communication ayant stocké complètement les contenus transmis peut supprimer les éventuels groupes de données d'un contenu qui sont situés avant et après les premier et dernier groupes de données désignés pour ce contenu ;
- au ii) lorsqu'un équipement de communication a stocké complètement les contenus transmis il peut le signaler à un équipement de gestion. Dans ce cas, au iii) l'équipement de gestion peut sélectionner un équipement de communication parmi ceux qui l'ont informé du stockage complet des contenus, puis il peut demander à cet équipement de communication sélectionné de découper chaque contenu stocké en groupes de données en fonction de la règle prédéfinie, puis de désigner dans chaque contenu stocké ses premier et dernier groupes de données ;
   ➢ au iii) l'équipement de gestion peut en outre demander à l'équipement de communication sélectionné de lui transmettre les désignations des premier et dernier groupes de données de ces contenus. Dans ce cas, au iv) l'équipement de gestion peut transmettre aux autres équipements de communication (qui ont stocké complètement les contenus transmis) les désignations des premier et dernier groupes de données de ces contenus afin qu'ils procèdent à leur découpage en fonction de la règle prédéfinie et compte tenu des désignations. Au v) l'équipement de gestion peut stocker les identifiants des contenus découpés en correspondance des identifiants des équipements de communication qui ont découpé ces contenus.

L'invention propose également un dispositif de contrôle pour un équipement de communication, propre à être connecté à un réseau de diffusion de contenus et à un réseau de communication, et comprenant des moyens d'analyse chargés de déterminer si cet équipement de communication a reçu et stocké l'intégralité d'un contenu transmis en direct via le réseau de diffusion, et dans l'affirmative d'initier la transmission à un équipement de gestion d'un message signalant le stockage complet du contenu par l'équipement de communication.

Le dispositif selon l'invention peut comporter d'autres caractéristiques qui peuvent être prises séparément ou en combinaison, et notamment :
- il peut comprendre des moyens de traitement chargés, en cas de réception d'un message issu de l'équipement de gestion, désignant leur équipement de communication en tant que « maître », et requérant un découpage du contenu stocké, de découper ce contenu en groupes de données en fonction d'une règle prédéfinie et de désigner pour ce contenu stocké des premier et dernier groupes de données, de sorte que le contenu découpé puisse être récupéré par d'autres équipements de communication, selon un mode de transmission de type pair à pair (P2P) ;
   ➢ les moyens de traitement peuvent être chargés d'initier la transmission à l'équipement de gestion d'un message comportant les désignations des premier et dernier groupes de données du contenu découpé ;
   ➢ les moyens de traitement peuvent être chargés, en cas de réception d'un message issu de l'équipement de gestion et comportant les désignations des premier et dernier groupes de données d'un contenu préalablement stocké, de découper ce contenu en groupes de données en fonction de la règle prédéfinie et compte tenu des premier et dernier groupes de données désignés pour ce contenu, de sorte que le contenu découpé puisse être récupéré par d'autres équipements de communication, selon un mode de transmission de type pair à pair (P2P) ;
   ➢ les moyens de traitement peuvent être chargés de découper chaque contenu stocké en groupes de données en fonction d'une règle prédéfinie portant sur la détection d'au moins une information choisie dans des entêtes accompagnant les données de contenu ;
      - les moyens de traitement peuvent être chargés de détecter la présence d'un champ d'information choisi et d'utiliser chaque champ d'information détecté pour délimiter deux groupes de données successifs ;
   ➢ les moyens de traitement peuvent être chargés de supprimer dans un contenu découpé les éventuels groupes de données qui sont situés avant et après les premier et dernier groupes de données désignés pour ce contenu.

L'invention propose également un équipement de communication, destiné à être connecté à un réseau de diffusion en continu et en direct de contenus et à un réseau de communication, et équipé d'un dispositif de contrôle du type de celui présenté ci-avant.

L'invention propose également un équipement de gestion, destiné à être connecté à un réseau de diffusion en continu et en direct de contenus et/ou à un réseau de communication, et comprenant des moyens de sélection chargés, en cas de réception de messages signalant le stockage complet d'un contenu par un ensemble d'équipements de communication, de sélectionner l'un des équipements de communication de cet ensemble, puis d'adresser à cet équipement de communication sélectionné un message lui demandant de découper le contenu qu'il a intégralement stocké en groupes de données en fonction d'une règle prédéfinie, puis de désigner dans chaque contenu stocké des premier et dernier groupes de données.

L'équipement de gestion selon l'invention peut comporter d'autres caractéristiques qui peuvent être prises séparément ou en combinaison, et notamment :
- ses moyens de sélection peuvent être en outre chargés de requérir dans le message que l'équipement de communication transmette à leur équipement de gestion les désignations des premier et dernier groupes de données du contenu qu'il a intégralement stocké. Dans ce cas, il peut également comprendre des moyens de gestion chargés, en cas de réception d'un message issu d'un équipement de communication faisant partie d'un ensemble d'équipements ayant intégralement stocké un contenu et contenant les désignations des premier et dernier groupes de données de ce contenu, de transmettre ces désignations aux autres équipements de communication de l'ensemble, de sorte qu'ils procèdent à leur tour à la découpe du contenu stocké en fonction de la règle prédéfinie et compte tenu des désignations de ses premier et dernier groupes de données ;
- il peut comprendre des moyens de stockage chargés de stocker les identifiants des contenus découpés en correspondance des identifiants des équipements de communication qui ont découpé ces contenus, de sorte que ces contenus puissent être récupérés auprès des équipements de communication par d'autres équipements de communication, selon un mode de transmission de type pair à pair (P2P) ;
- les moyens de sélection peuvent être chargés de sélectionner un équipement de communication en fonction d'au moins un critère choisi ou bien par tirage au sort.

L'invention est particulièrement bien adaptée, bien que de façon non limitative, à la diffusion de contenus au moyen d'un réseau de diffusion dont le type est choisi parmi (au moins) ADSL, DVB-T, DVB-H, T-DMB et DAB.

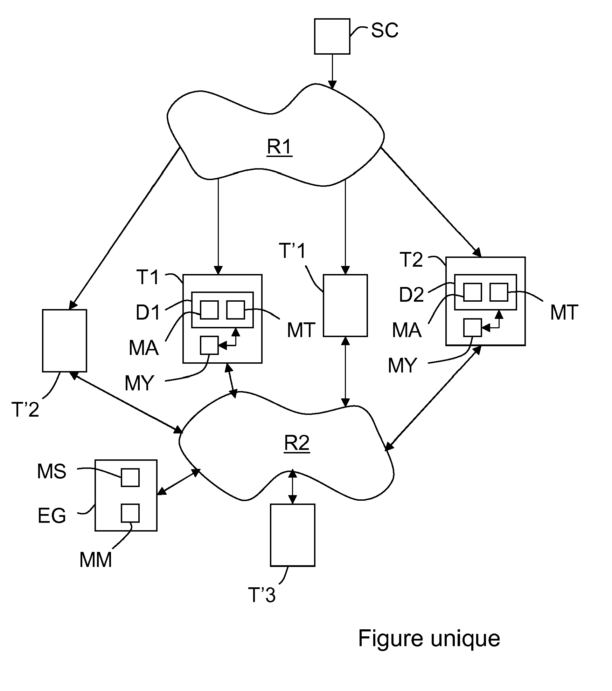

### Brève description du dessin

D'autres caractéristiques et avantages de l'invention apparaîtront à l'examen de la description détaillée ci-après, et du dessin annexé, sur lequel l'unique figure illustre de façon très schématique et fonctionnelle deux équipements de communication équipés chacun d'un dispositif de contrôle selon l'invention et connectés à un réseau de diffusion en continu et en direct de contenus et à un réseau de communication auquel est également connecté un équipement de gestion selon l'invention.

Le dessin annexé pourra non seulement servir à compléter l'invention, mais aussi contribuer à sa définition, le cas échéant.

### Description détaillée

L'invention a pour objet de permettre à des équipements de communication, qui sont connectés à un réseau de diffusion en continu (« streaming ») et en direct (ou en léger différé) de contenus et à un réseau de communication, de stocker certains au moins de ces contenus diffusés dans leur intégralité afin qu'ils puissent être récupérés en différé par d'autres équipements de communication, qui sont connectés soit au réseau de diffusion et au réseau de communication, soit seulement au réseau de communication.

Les contenus peuvent par exemple être diffusés en continu et en direct dans le cadre d'un service de vidéo à la demande (VOD) ou d'un service de diffusion de programmes (par exemple de télévision ou radiophoniques ou encore musicaux) ou de fichiers (ou data).

Il est important de noter que le réseau de diffusion et le réseau de communication peuvent être confondus. Dans ce cas, le réseau de communication assure également la diffusion des contenus.

Dans ce qui suit, on considère à titre d'exemple non limitatif que le réseau de diffusion (R1) est de type DVB-T. Mais, l'invention n'est pas limitée à ce type de réseau de diffusion. Elle concerne en effet tout type de réseau (ou infrastructure) de diffusion, filaire ou non filaire, capable de diffuser en continu et en direct des contenus (éventuellement multiplexés) à destination d'équipements de communication. Il pourra donc s'agir d'un réseau filaire, tel qu'un réseau à lignes de transmission de données à moyen ou haut débit, comme par exemple des lignes de type xDSL ou des câbles ou encore des fibres optiques, ou d'un réseau de diffusion terrestre (par exemple de type DVB-H, T-DBM ou DAB) ou satellitaire ou encore hybride.

Par ailleurs, on considère dans ce qui suit, à titre d'exemple non limitatif, que le réseau de communication (R2) est un réseau filaire (par exemple de type ADSL) offrant un accès IP. Mais, l'invention n'est pas limitée à ce type de réseau de communication. Elle concerne en effet tout type de réseau de communication capable de transmettre par voie filaire ou par voie d'ondes des paquets de données de contenus (éventuellement de type IP). Il pourra donc s'agir également d'un réseau filaire à câbles ou fibres optiques, ou d'un réseau non filaire, éventuellement de type mobile ou cellulaire.

Compte tenu des choix illustratifs effectués ci-avant, on considère dans ce qui suit, à titre d'exemple non limitatif, que les équipements de communication (Ti) des clients sont des récepteurs de contenus de type STB (Set-Top Box). Mais, l'invention n'est pas limitée à ce type d'équipement de communication. Elle concerne en effet tout type d'équipement de communication capable de recevoir des contenus, notamment en continu et en direct, d'un réseau de diffusion et d'échanger des paquets de données de contenus, par voie filaire ou par voie d'ondes, notamment selon un mode pair à pair, avec d'autres équipements de communication ou équipements de réseau via un réseau de communication. Il pourra donc s'agir également d'un téléphone fixe ou mobile (ou cellulaire), d'un ordinateur fixe ou portable, d'un assistant numérique personnel (ou PDA), ou d'un récepteur de contenus (comme par exemple un décodeur ou une passerelle résidentielle).

Sur l'unique figure deux types d'équipements de communication Ti (i = 1 ou 2) et T'j (j = 1 à 3) ont été représentés. Le premier type (Ti) regroupe des équipements de communication qui sont équipés d'un dispositif Di selon l'invention et qui sont connectés au réseau de diffusion R1 et au réseau de communication R2. Le second type (T'j) regroupe des équipements de communication qui ne sont pas équipés d'un dispositif Di selon l'invention mais qui sont connectés soit au réseau de diffusion R1 et au réseau de communication R2 (ils peuvent alors recevoir classiquement des contenus en direct pour leur utilisation personnelle et récupérer des contenus complets auprès d'équipement(s) de communication du premier type Ti), soit seulement au réseau de communication R2 (ils ne peuvent alors que récupérer des contenus complets auprès d'équipement(s) de communication du premier type Ti).

On notera que les indices i et j peuvent prendre n'importe quelle valeur supérieure ou égale à 1.

Enfin, on considère dans ce qui suit, à titre d'exemple non limitatif, que les contenus diffusés sont des programmes de télévision (vidéo). Mais, l'invention n'est pas limitée à ce type de contenu. Elle concerne en effet tout type de contenu constitué d'un ensemble de données pouvant être diffusé sous forme de paquets de données (éventuellement multiplexés). Il pourra donc s'agir également de contenus audio, comme par exemple des programmes audio (radiophoniques ou musicaux), de jeux, de contenus multimédia, ou encore de fichiers informatiques (ou « data »).

L'invention propose un procédé comprenant cinq étapes principales.

Une première étape principale (i) consiste à transmettre en direct et en continu des contenus à des équipements de communication du premier type Ti via le réseau de diffusion R1.

Comme illustré, les contenus sont par exemple issus d'un serveur de contenus SC qui est connecté au réseau de diffusion R1. Mais, ils pourraient être issus de plusieurs serveurs de contenus.

Certains équipements de communication du premier type Ti stockent (enregistrent), par exemple dans une mémoire MY (ou tout moyen de stockage équivalent), certains contenus diffusés en direct que le fournisseur de contenus autorise à récupérer en différé en mode P2P. Pour ce faire, ils sont programmés en fonction d'ensembles d'informations qui définissent des contenus, par exemple au sein d'un guide de programmes électronique (ou EPG (« Electronic Program Guide »)) ou d'une table d'informations de service.

Il est rappelé qu'un EPG est un fichier qui est généré par un fournisseur de contenus (tels que des programmes de télévision) et qui est régulièrement transmis aux équipements de communication Ti et T'j, notamment via le réseau de diffusion R1 avant le début de la transmission des contenus qu'il définit. Un EPG comprend notamment pour chaque contenu (ici un programme de télévision) un résumé, des champs définissant son type, sa durée de diffusion en direct et les horaires de début et de fin de sa diffusion en direct, ainsi qu'éventuellement une indication signalant qu'il peut être récupéré en différé en mode P2P. L'enregistrement d'un contenu commence alors généralement quelques instants (par exemple quelques minutes) avant le début théorique de diffusion de ce contenu qui est indiqué dans l'EPG et s'achève généralement quelques instants (par exemple quelques minutes) après la fin théorique de diffusion de ce contenu qui est indiquée dans l'EPG.

Une deuxième étape principale (ii) du procédé consiste à déterminer les équipements de communication du premier type Ti qui ont reçu complètement et stocké les contenus transmis par diffusion via le réseau de diffusion R1.

Cette deuxième étape principale (ii) peut par exemple se faire à l'initiative des équipements de communication du premier type Ti, et plus précisément du dispositif de contrôle Di qu'ils comprennent (comme illustré) ou auquel ils sont couplés.

Un dispositif de contrôle Di, selon l'invention, comprend un module d'analyse MA qui est tout d'abord chargé de déterminer si son équipement de communication du premier type Ti à reçu (et stocké) l'intégralité d'un contenu qui a été transmis en direct via le réseau de diffusion R1. Pour ce faire, il peut par exemple observer les données des contenus qui sont stockés dans les moyens de stockage MY de son équipement de communication du premier type Ti, afin de vérifier si les horaires de début et de fin du stockage d'un contenu correspondent aux horaires de début et de fin de diffusion d'un contenu qui sont indiqués dans l'EPG.

Dans l'affirmative (et donc si un tel contenu a été stocké), le module d'analyse MA initie la transmission à un équipement de gestion EG, selon l'invention, d'un message signalant le stockage complet d'un contenu désigné par son équipement de communication du premier type Ti.

Cet équipement de gestion EG est accessible via le réseau de diffusion R1 et/ou via le réseau de communication R2 (comme illustré de façon non limitative sur l'unique figure).

Un équipement de gestion EG est notamment chargé de réceptionner les messages qui sont transmis par les équipements de communication du premier type Ti et qui signalent le stockage complet d'un contenu désigné. A réception d'un tel message, il peut par exemple (pré-)stocker l'identifiant de communication de l'équipement de communication du premier type Ti qui l'a transmis en correspondance de l'identifiant du contenu qu'il désigne.

Grâce à ce mécanisme d'information, l'équipement de gestion EG détermine très rapidement après la diffusion d'un contenu les équipements de communication du premier type Ti qui l'ont effectivement intégralement (ou complètement) stocké dans leurs moyens de stockage MY. Ces équipements de communication du premier type Ti forment alors un ensemble associé à (au moins) un contenu diffusé.

Une troisième étape principale (iii) du procédé consiste à sélectionner l'un des équipements de communication du premier type Ti qui fait partie d'un ensemble associé à (au moins) un contenu diffusé afin de lui demander de découper ce contenu reçu en groupes de données (ou « chunks ») en fonction d'une règle prédéfinie, puis de désigner dans chaque contenu reçu des premier et dernier groupes de données (ou chunks).

On comprendra que cette sélection se fait préférentiellement dans l'équipement de gestion EG. Dans ce cas, l'équipement de gestion EG comprend un module de sélection MS qui est notamment chargé de sélectionner l'un des équipements de communication du premier type Ti d'un ensemble associé à (au moins) un contenu diffusé et constitué à partir des messages reçus, comme indiqué ci-avant. Cet équipement sélectionné, par exemple T1, est par exemple appelé équipement « maître » pour (au moins) un contenu diffusé.

Tout type de sélection peut être envisagé, et notamment une sélection en fonction d'au moins un critère (portant par exemple sur la bande passante disponible ou le débit ou encore les capacités de stockage) ou par tirage au sort (aléatoire).

Une fois que le module de sélection MS a sélectionné un équipement maître pour (au moins) un contenu diffusé, il lui adresse un message lui demandant de découper le(s) contenu(s) qu'il a intégralement stocké(s) en groupes de données (chunks) en fonction de la règle prédéfinie, puis de désigner dans chaque contenu stocké des premier et dernier groupes de données (chunks).

A réception d'un tel message, l'équipement maître T1 le transmet à son dispositif de contrôle D1. Ce dernier (D1) comprend un module de traitement MT chargé, lorsque son équipement T1 a été désigné en tant que maître pour (au moins) un contenu désigné dans un message, d'extraire des moyens de stockage MY de son équipement maître T1 chaque contenu désigné afin de le découper en groupes de données (chunks) en fonction de la règle prédéfinie et de désigner pour lui des premier et dernier groupes de données (chunks).

Tout type de règle peut être envisagé, et notamment une règle portant sur la détection d'au moins une information choisie dans les entêtes de la couche de transport qui accompagnent les données (utiles) des contenus lorsqu'ils sont transmis sous forme de paquets, par exemple IP (« Internet Protocol »). Cette solution garantit que une indépendance vis-à-vis du mécanisme de sécurisation (ou DRM (« Digital Rights management ») - gestion des Droits numériques) qui est appliqué au contenu. Par exemple, le module de traitement MT peut analyser les contenus stockés afin de détecter la présence d'un champ d'information choisi. Par exemple, lorsque les contenus sont transmis selon le format MPEG-2 TS (« Transport Stream »), le module de traitement MT peut notamment rechercher dans les entêtes TS le champ d'information appelé PCR (« Program Clock Delivery » - champ utilisé pour la resynchronisation) ou PTS (« Presentation Time Stamp » - champ utilisé pour signaler une information temporelle).

Il est rappelé que, selon le standard DVB (« Digital Video Broadcating » - standard de diffusion de vidéos sous forme numérique), on place avant chaque image d'une vidéo un champ PCR, soit un champ PCR toutes les 40 ms et donc par paquet TS.

Chaque champ d'information détecté (par exemple dans un entête TS) peut alors servir à délimiter deux groupes de données (chunks) successifs, et ainsi permettre le découpage d'un contenu stocké.

Une fois que le module de traitement MT a découpé un contenu en chunks, il choisit l'un d'entre eux en tant que premier chunk (ou chunk de début de contenu) et un autre d'entre eux en tant que dernier chunk (ou chunk de fin de contenu). Ce double choix (début et fin d'un contenu) peut par exemple se faire grâce à une information qui est contenue dans l'EPG (ou analogue). En variante, ce double choix (début et fin d'un contenu) peut par exemple se faire en utilisant les informations qui sont transmises au début de chaque « évènement » (que constitue notamment un contenu) dans un champ d'information, comme par exemple le champ EIT - PF (« Present/Following ») qui est par ailleurs contenu dans la table d'information sur les contenus appelée EIT (« Event Information Table »), laquelle est transmise aux usagers avant la transmission des contenus.

Le contenu découpé est ensuite de nouveau stocké, par exemple dans les moyens de stockage MS de l'équipement maître T1, ou bien dans d'autres moyens de stockage de ce dernier, de sorte qu'il puisse être récupéré ultérieurement par d'autres équipements de communication du premier type Ti' (i'≠i) ou du second type T'j, selon un mode de transmission de type pair à pair (P2P).

On notera qu'avant que le module de traitement MT ne procède au stockage final d'un contenu découpé, il peut éventuellement supprimer les éventuels groupes de données (chunks) qui sont situés avant et après les premier et dernier groupes de données qu'il a choisis pour ce contenu découpé.

Une quatrième étape principale (iv) du procédé consiste à demander aux autres équipements de communication du premier type Ti (par exemple T2), qui font partie du même ensemble que l'équipement maître T1 qui vient de procéder au découpage d'un (d'au moins un) contenu, de procéder à leur tour au découpage de ce(s) contenu(s) qu'ils stockent en fonction de la règle prédéfinie (utilisée par l'équipement maître T1) et compte tenu des désignations de leurs premier et dernier groupes de données (respectifs).

Une désignation de premier et dernier chunks peut par exemple consister en la fourniture des données qui constituent le début et la fin d'un contenu (par exemple ses première et dernière images dans le cas d'une vidéo). Mais, il peut également s'agir d'informations qui désignent dans l'EPG les première et dernières images d'un contenu. Dans ce dernier cas, une comparaison entre les dernières images du contenu précédent et les premières images du contenu désigné permet de déterminer la première image du contenu désigné et une comparaison entre les dernières images du contenu désigné et les premières images du contenu qui le suit permet de déterminer la dernière image du contenu désigné.

Les désignations des premier et dernier groupes de données d'un contenu peuvent par exemple être transmises directement par l'équipement maître T1 aux autres équipements de communication du premier type (T2) de son ensemble. Mais, cela impose qu'il connaisse les adresses de communication (ou au moins des identifiants) de ces autres équipements de communication du premier type (T2). Ces adresses (ou identifiants) peuvent par exemple lui être transmises par l'équipement de gestion EG en même temps que le message qui le désigne en tant que maître, ou bien sur requête et donc à son initiative.

Mais, dans une variante avantageuse, les désignations des premier et dernier groupes de données (chunks) d'un contenu peuvent par exemple être tout d'abord transmises par l'équipement maître T1 à l'équipement de gestion EG, au moyen d'un message dédié et à l'initiative du module de traitement MT de son dispositif de contrôle D1.

Dans ce cas, l'équipement de gestion EG comprend un module de gestion MG chargé, lorsqu'il reçoit un message dédié issu d'un équipement maître T1 faisant partie d'un ensemble associé à (au moins) un contenu et contenant les désignations des premier et dernier groupes de données de ce contenu, de déterminer les adresses de communication (ou au moins des identifiants) des autres équipements de communication du premier type (T2) de cet ensemble (précédemment stockées par son équipement de gestion EG) afin de transmettre à chacun de ces autres équipements de communication du premier type (T2) un message contenant les désignations des premier et dernier groupes de données reçues.

Puis, lorsque les autres équipements de communication du premier type (T2) reçoivent ces messages, ils les communiquent à leurs dispositifs de contrôle (D2) respectifs. Le module de traitement MT de chaque dispositif de contrôle (D2) extrait alors des moyens de stockage MY de son équipement de communication du premier type (T2) chaque contenu désigné dans le message reçu afin de le découper en groupes de données (chunks) en fonction de la règle prédéfinie (utilisée par l'équipement maître T1) et compte tenu des désignations de ses premier et dernier groupes de données contenues dans le message reçu.

Puis, le module de traitement MT de chaque dispositif de contrôle (D2) stocke de nouveau chaque contenu découpé, par exemple dans les moyens de stockage MY de son équipement de communication du premier type (T2), ou bien dans d'autres moyens de stockage de ce dernier, de sorte qu'il puisse être récupéré ultérieurement par d'autres équipements de communication du premier type Ti' (i'≠i) ou du second type T'j, selon un mode de transmission de type pair à pair (P2P). Comme indiqué ci-avant, avant qu'un module de traitement MT ne procède au stockage final d'un contenu découpé, il peut éventuellement supprimer les éventuels groupes de données (chunks) qui sont situés avant et après les premier et dernier groupes de données qu'il a choisis pour ce contenu découpé.

Une cinquième étape principale (v) du procédé consiste à stocker les identifiants des contenus découpés en correspondance des identifiants des équipements de communication du premier type Ti qui ont découpé ces contenus. Ce stockage peut par exemple se faire dans des moyens de stockage MM de l'équipement de gestion EG. Ces moyens de stockage MM peuvent se présenter sous n'importe quelle forme, comme par exemple une mémoire ou une base de données.

Par exemple, l'équipement de gestion EG peut stocker et mettre à jour dans ses moyens de stockage MM une table dans laquelle se trouve indiquée, pour chaque contenu diffusé et pouvant faire l'objet d'une récupération en différé, la liste des adresses de communication (ou au moins des identifiants) des équipements de communication du premier type Ti qui le stocke intégralement. Une telle table peut être communiquée (par exemple périodiquement) par l'équipement de gestion EG à des équipements de communication du premier type Ti et du second type T'j dont les usagers sont des clients, afin qu'ils puissent récupérer le(s) contenu(s) qui intéresse(nt) leurs usagers auprès des équipements de communication du premier type Ti qui le(s) stockent, selon un mode de transmission de type pair à pair (P2P).

On notera que chaque équipement de communication du premier type Ti peut éventuellement appliquer sa propre politique en matière de durée de stockage de contenus intégraux découpés en vue d'une récupération en différé. En d'autres termes, il peut par exemple ne stocker un contenu découpé que pendant une durée prédéfinie.

On notera également que chaque équipement du premier type Ti peut être éventuellement agencé de manière à supprimer des chunks choisis qui sont situés entre les premier et dernier chunks d'un contenu qu'il a découpé, après avoir attribué des identifiants à chacun des chunks du contenu découpé complet. Ainsi, il ne stocke que les contenus qui intéressent son usager, tout en offrant la possibilité à d'autres équipements de récupérer les portions de contenu qu'il a conservées dans ses moyens de stockage après l'opération de suppression.

On notera également que lorsque le nombre d'équipements (de communication) du premier type Ti qui stockent un même contenu complet (découpé) est faible, l'équipement de gestion EG peut être éventuellement agencé de manière à demander à un ou plusieurs autres équipements de communication du premier type Ti' d'aller récupérer ce contenu complet auprès de l'un des équipements de communication du premier type Ti qui le stockent, afin de le stocker lui-même et donc de le mettre à la disposition d'autres équipements du premier type Ti' ou du second type T'j. Dans ce cas, l'adresse de communication (ou au moins un identifiant) de chaque nouvel équipement du premier type Ti', qui stocke un contenu déjà découpé, récupéré, est ajouté en correspondance de l'identifiant de ce contenu dans la table stockée dans les moyens de stockage MM de l'équipement de gestion EG.

On notera qu'un dispositif de contrôle Di, selon l'invention, est préférentiellement réalisé sous la forme de modules logiciels (« software »). Mais, il peut être également réalisé sous la forme de circuits électroniques (« hardware ») ou d'une combinaison de modules logiciels et de circuits électroniques.

De même, le module de sélection MS, ainsi qu'éventuellement les moyens de stockage MM, de l'équipement de gestion EG, sont préférentiellement réalisés sous la forme de modules logiciels. Mais, il(s) peu(ven)t être également réalisé(s) sous la forme de circuits électroniques ou d'une combinaison de modules logiciels et de circuits électroniques.

L'invention ne se limite pas aux modes de réalisation de dispositif de contrôle, d'équipement de communication, d'équipement de gestion et de procédé de transmission décrits ci-avant, seulement à titre d'exemple, mais elle englobe toutes les variantes que pourra envisager l'homme de l'art dans le cadre des revendications ci-après.

## Revendications

1. Procédé de transmission de contenus à des équipements de communication (Ti) connectés à un réseau (R1) de diffusion de contenus et à un réseau de communication (R2), **caractérisé en ce qu'**il consiste i) à transmettre en direct des contenus à des équipements de communication (Ti) via ledit réseau de diffusion (R1), puis ii) à déterminer les équipements de communication (Ti) ayant reçu complètement et stocké lesdits contenus transmis, puis iii) à sélectionner l'un de ces équipements de communication (Ti) déterminés afin de lui demander de découper chaque contenu stocké en groupes de données en fonction d'une règle prédéfinie, puis de désigner dans chaque contenu stocké des premier et dernier groupes de données, puis iv) à demander aux autres équipements de communication (Ti) ayant stocké complètement lesdits contenus transmis de procéder au découpage de ces contenus stockés en fonction de ladite règle prédéfinie et compte tenu des désignations de leurs premier et dernier groupes de données respectifs, et v) à stocker les identifiants des contenus découpés en correspondance des identifiants desdits équipements de communication (Ti) qui ont découpé ces contenus, de sorte que ces contenus puissent être récupérés auprès desdits équipements de communication (Ti) par d'autres équipements de communication (Ti', T'j), selon un mode de transmission de type pair à pair.

2. Procédé selon la revendication 1, **caractérisé en ce qu'**au iii) on sélectionne un équipement de communication (Ti) en fonction d'au moins un critère choisi.

3. Procédé selon la revendication 1, **caractérisé en ce qu'**au iii) on sélectionne un équipement de communication (Ti) par tirage au sort.

4. Procédé selon l'une des revendications 1 à 3, **caractérisé en ce qu'**au iii) ledit équipement de communication (Ti) sélectionné découpe chaque contenu stocké en groupes de données en fonction d'une règle prédéfinie portant sur la détection d'au moins une information choisie dans des entêtes accompagnant lesdites données de contenu.

5. Procédé selon la revendication 4, **caractérisé en ce qu'**au iii) on détecte la présence d'un champ d'information choisi et on se sert de chaque champ d'information détecté pour délimiter deux groupes de données successifs.

6. Procédé selon la revendication 5, **caractérisé en ce qu'**au iii), en présence de contenus transmis selon le format MPEG-2 TS, ledit champ d'information est choisi dans un groupe comprenant au moins les champs PCR, PTS et EIT-PF.

7. Procédé selon l'une des revendications 1 à 6, **caractérisé en ce qu'**au iv) chaque équipement de communication (Ti) ayant stocké complètement lesdits contenus transmis supprime les éventuels groupes de données d'un contenu qui sont situés avant et après les premier et dernier groupes de données désignés pour ce contenu.

8. Procédé selon l'une des revendications 1 à 7, **caractérisé en ce qu'**au ii) lorsqu'un équipement de communication (Ti) a stocké complètement lesdits contenus transmis il le signale à un équipement de gestion (EG), et **en ce qu'**au iii) ledit équipement de gestion (EG) sélectionne un équipement de communication (Ti) parmi ceux qui l'ont informé du stockage complet desdits contenus, puis il demande à cet équipement de communication (Ti) sélectionné de découper chaque contenu stocké en groupes de données en fonction de ladite règle prédéfinie, puis de désigner dans chaque contenu stocké ses premier et dernier groupes de données.

9. Procédé selon la revendication 8, **caractérisé en ce qu'**au iii) ledit équipement de gestion (EG) demande en outre audit équipement de communication (Ti) sélectionné de lui transmettre lesdites désignations des premier et dernier groupes de données de ces contenus, **en ce qu'**au iv) ledit équipement de gestion (EG) transmet auxdits autres équipements de communication (Ti'), qui ont stocké complètement lesdits contenus transmis, lesdites désignations des premier et dernier groupes de données de ces contenus afin qu'ils procèdent à leur découpage en fonction de ladite règle prédéfinie et compte tenu desdites désignations, et **en ce qu'**au v) ledit équipement de gestion (EG) stocke les identifiants des contenus découpés en correspondance des identifiants desdits équipements de communication (Ti) qui ont découpé ces contenus.

10. Dispositif de contrôle (Di) pour un équipement de communication (Ti) propre à être connecté à un réseau (R1) de diffusion de contenus et à un réseau de communication (R2), **caractérisé en ce qu'**il comprend des moyens d'analyse (MA) agencés pour déterminer si ledit équipement de communication (Ti) à reçu et stocké l'intégralité d'un contenu transmis en direct via ledit réseau de diffusion (R1), et dans l'affirmative pour initier la transmission à un équipement de gestion (EG) d'un message signalant le stockage complet dudit contenu par ledit équipement de communication (Ti).

11. Dispositif selon la revendication 10, **caractérisé en ce qu'**il comprend des moyens de traitement (MT) agencés, en cas de réception d'un message issu dudit équipement de gestion (EG), désignant ledit équipement de communication (Ti) en tant que « maître », et requérant un découpage dudit contenu stocké, pour découper ce contenu en groupes de données en fonction d'une règle prédéfinie et désigner pour ledit contenu stocké des premier et dernier groupes de données, de sorte que ledit contenu découpé puisse être récupéré par d'autres équipements de communication (Ti', T'j), selon un mode de transmission de type pair à pair.

12. Dispositif selon la revendication 11, **caractérisé en ce que** lesdits moyens de traitement (MT) sont agencés pour initier la transmission audit équipement de gestion (EG) d'un message comportant les désignations des premier et dernier groupes de données du contenu découpé.

13. Dispositif selon l'une des revendications 11 et 12, **caractérisé en ce que** lesdits moyens de traitement (MT) sont agencés, en cas de réception d'un message issu dudit équipement de gestion (EG) et comportant les désignations des premier et dernier groupes de données d'un contenu préalablement stocké, pour découper ce contenu en groupes de données en fonction de ladite règle prédéfinie et compte tenu desdits premier et dernier groupes de données désignés pour ce contenu, de sorte que ledit contenu découpé puisse être récupéré par d'autres équipements de communication (Ti', T'j), selon un mode de transmission de type pair à pair.

14. Dispositif selon l'une des revendications 11 à 13, **caractérisé en ce que** lesdits moyens de traitement (MT) sont agencés pour découper chaque contenu stocké en groupes de données en fonction d'une règle prédéfinie portant sur la détection d'au moins une information choisie dans des entêtes accompagnant lesdites données de contenu.

15. Dispositif selon la revendication 14, **caractérisé en ce que** lesdits moyens de traitement (MT) sont agencés pour détecter la présence d'un champ d'information choisi et pour utiliser chaque champ d'information détecté pour délimiter deux groupes de données successifs.

16. Dispositif selon la revendication 15, **caractérisé en ce qu'**en présence de contenus transmis selon le format MPEG-2 TS, ledit champ d'information est choisi dans un groupe comprenant au moins les champs PCR, PTS et EIT-PF.

17. Dispositif selon l'une des revendications 11 à 16, **caractérisé en ce que** lesdits moyens de traitement (MT) sont agencés pour supprimer dans un contenu découpé les éventuels groupes de données qui sont situés avant et après les premier et dernier groupes de données désignés pour ce contenu.

18. Equipement de communication (Ti), propre à être connecté à un réseau (R1) de diffusion de contenus et à un réseau de communication (R2), **caractérisé en ce qu'**il comprend un dispositif de contrôle (Di) selon l'une des revendications 10 à 17.

19. Equipement de gestion (EG) pour un réseau (R1) de diffusion de contenus et/ou un réseau de communication (R2) auxquels sont connectés des équipements de communication (Ti) selon la revendication 18, **caractérisé en ce qu'**il comprend des moyens de sélection (MS) agencés, en cas de réception de messages signalant le stockage complet d'un contenu par un ensemble d'équipements de communication (Ti), pour sélectionner l'un des équipements de communication (Ti) de cet ensemble, puis pour adresser à cet équipement de communication (Ti) sélectionné un message lui demandant de découper ledit contenu intégralement stocké en groupes de données en fonction d'une règle prédéfinie puis de désigner dans chaque contenu stocké des premier et dernier groupes de données.

20. Equipement selon la revendication 19, **caractérisé en ce que** lesdits moyens de sélection (MS) sont en outre agencés pour requérir dans ledit message que ledit équipement de communication (Ti) transmette audit équipement de gestion (EG) les désignations des premier et dernier groupes de données du contenu qu'il a intégralement stocké, et **en ce qu'**il comprend des moyens de gestion (MG) agencés, en cas de réception d'un message issu d'un équipement de communication (Ti) faisant partie d'un ensemble d'équipements ayant intégralement stocké un contenu et contenant les désignations des premier et dernier groupes de données dudit contenu, pour transmettre ces désignations aux autres équipements de communication (Ti) dudit ensemble, de sorte qu'ils procèdent à leur tour à la découpe du contenu stocké en fonction de ladite règle prédéfinie et compte tenu des désignations de ses premier et dernier groupes de données.

21. Equipement selon l'une des revendications 19 et 20, **caractérisé en ce qu'**il comprend des moyens de stockage (MM) propres à stocker les identifiants des contenus découpés en correspondance des identifiants des équipements de communication (Ti) qui ont découpé ces contenus, de sorte que ces contenus puissent être récupérés auprès desdits équipements de communication (Ti) par d'autres équipements de communication (Ti', T'j), selon un mode de transmission de type pair à pair.

22. Equipement selon l'une des revendications 19 à 21, **caractérisé en ce que** lesdits moyens de sélection (MS) sont agencés pour sélectionner un équipement de communication (Ti) en fonction d'au moins un critère choisi.

23. Equipement selon l'une des revendications 19 à 21, **caractérisé en ce que** lesdits moyens de sélection (MS) sont agencés pour sélectionner un équipement de communication (Ti) par tirage au sort.

24. Utilisation du dispositif de contrôle (Di), de l'équipement de communication (Ti), de l'équipement de gestion (EG) et du procédé de transmission selon l'une des revendications précédentes dans le cas d'un réseau de diffusion (R1) d'un type choisi dans un groupe comprenant au moins ADSL, DVB-T, DVB-H, T-DMB et DAB.
